# EUROPEAN PATENT APPLICATION

(11) **EP 4 538 338 A1**
(43) Date of publication of application: **16.04.2025**
(21) Application number: 23819468.2
(22) Date of filing: 28.03.2023
(51) Int. Cl.: C09D 11/36, B41J 2/01, B41M 5/00

(54) **AQUEOUS INKJET INK COMPOSITION**

(30) Priority: 06.06.2022 JP 2022091681
(71) Applicant: Sakata INX Corporation, Osaka-shi, Osaka 550-0002 (JP)
(72) Inventor: MAEDA, Hirohito, Osaka-shi, Osaka 550-0002 (JP); MORIYASU, Kazuki, Osaka-shi, Osaka 550-0002 (JP); UEDA, Eri, Osaka-shi, Osaka 550-0002 (JP); SANO, Takaaki, Osaka-shi, Osaka 550-0002 (JP)
(74) Representative: KIPA AB
(86) International application number: PCT/JP2023/012473
(87) International publication number: WO 2023/238481

(57) **Abstract**

Provided is an aqueous inkjet ink composition comprising a pigment, an alkali-soluble resin, a water-soluble organic solvent having a water solubility of 500 g/L or more at 25°C, water, and a surfactant, wherein a content of the water-soluble organic solvent is 20% by mass or more in the aqueous inkjet ink composition, and wherein a total amount of alkali metals is 1.5 g/L or less.

## Description

### TECHNICAL FIELD

The present invention relates to an aqueous inkjet ink composition. In more detail, the present invention relates to an aqueous inkjet ink composition that is less likely to erode a silicon nozzle plate and exhibits a good storage stability.

### BACKGROUND ART

Conventionally, in an inkjet printer that ejects an aqueous inkjet ink containing a pigment and an alkali-soluble resin, a site from which the ink is ejected is provided with a nozzle plate having a plurality of ejection ports. The nozzle plate has a water-repellent layer on its surface to maintain ejection performance of the ink.

However, when a conventional aqueous inkjet ink was used on a nozzle plate having a silicon surface, there was a problem that water repellency of the plate was reduced due to components in the ink. Therefore, Patent Document 1 proposes a technique of improving ejection stability by collecting polyvalent metals (Ca) in an ink with chelating resins (-H type, -Na type, -K type).

### PRIOR ART DOCUMENT

### Patent Document

Patent Document 1: WO 2012/086789

### SUMMARY OF THE INVENTION

However, storage stability of the ink described in Patent Document 1 was easily reduced.

The present invention has been made in consideration of such conventional problems, and it is an object of the present invention to provide an aqueous inkjet ink that is less likely to erode a silicon nozzle plate and exhibits a good storage stability.

The aqueous inkjet ink composition according to one embodiment of the present invention that solves the above-described problems comprises a pigment, an alkali-soluble resin, a water-soluble organic solvent having a water solubility of 500 g/L or more at 25°C, water, and a surfactant, wherein a content of the water-soluble organic solvent is 20% by mass or more in the aqueous inkjet ink composition, and wherein a total amount of alkali metals is 1.5 g/L or less.

### EMBODIMENT FOR CARRYING OUT THE INVENTION

### <Aqueous inkjet ink composition>

The aqueous inkjet ink composition (hereinafter also referred to as an ink composition) according to one embodiment of the present invention comprises a pigment, an alkali-soluble resin, a water-soluble organic solvent having a water solubility of 500 g/L or more at 25°C, water, and a surfactant. A content of the water-soluble organic solvent is 20% by mass or more in the aqueous inkjet ink composition. A total amount of alkali metals is 1.5 g/L or less. Each component will be described below.

### (Pigment)

The pigment is not particularly limited. By way of an example, examples of the pigment include various organic pigments and inorganic pigments. The organic pigments include dye lake pigments, azo-based pigments, benzimidazolone-based pigments, phthalocyanine-based pigments, quinacridone-based pigments, anthraquinone-based pigments, dioxazine-based pigments, indigo-based pigments, thioindigo-based pigments, perylene-based pigments, perinone-based pigments, diketo-pyrrolo-pyrrole-based pigments, isoindolinone-based pigments, nitro-based pigments, nitroso-based pigments, flavanthrone-based pigments, quinophthalone-based pigments, pyranthrone-based pigments, or indanthrone-based pigments, and the like.

The inorganic pigments include carbon black, titanium oxide, zinc white, red oxide, graphite, iron black, chromium oxide green, aluminum hydroxide, and the like.

The pigment may be surface-treated with a known surface treatment agent.

A yellow pigment is C. I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, 213, or the like.

A magenta pigment is C. I. Pigment Red 5, 7, 12, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, 270, C. I. Pigment Violet 19, or the like.

A cyan pigment is C. I. Pigment Blue 1, 2, 3, 15, 15:1, 15:2, 15:3, 15:4, 15:6, 16, 18, 22, 27, 29, 60, or the like.

A black pigment is carbon black (C. I. Pigment Black 7) or the like.

The white pigment is titanium oxide, aluminum oxide, or the like. The white pigment may be surface-treated with various materials such as alumina and silica.

A content of the pigment is not particularly limited. By way of an example, a content of pigments other than the white pigment is preferably 0.5% by mass or more, and more preferably 2% by mass or more, in the ink composition. Moreover, the content of pigments other than the white pigment is preferably 10% by mass or less, and more preferably 8% by mass or less, in the ink composition. On the other hand, a content of the white pigment is preferably 4% by mass or more, and more preferably 8% by mass or more, in the ink composition. Moreover, the content of the white pigment is preferably 25% by mass or less, and more preferably 20% by mass or less, in the ink composition. When the content of the pigment is within the above-described ranges, the ink composition can achieve both color reproducibility and ejection performance.

### (Alkali-soluble resin)

The alkali-soluble resin is not particularly limited. By way of an example, examples of the alkali-soluble resin include a resin obtained by polymerizing a monomer having an unsaturated double bond, a resin obtained by reaction between functional groups, and the like.

Specifically, examples of the alkali-soluble resin include various binder resins such as an acryl-based resin obtained by copolymerizing acrylic acid or methacrylic acid and an alkyl ester thereof or styrene as main monomer components, a styrene-acryl-based resin, a styrene-maleic acid-based resin, a styrene-acryl-maleic acid-based resin, a polyurethane-based resin, a polyester-based resin, and the like. Among them, the alkali-soluble resin is preferably an acryl-based resin. This provides advantages of a good pigment dispersibility during production of an ink base and an excellent storage stability of an ink composition.

These alkali-soluble resins may be dissolved in water in the presence of a basic compound and used as a water-soluble resin varnish. The basic compound is not particularly limited. By way of an example, examples of the basic compound include ammonia, an organic amine, an alkali metal hydroxide, and the like. Examples of the organic amine include alkylamine such as diethylamine, triethylamine, and ethylenediamine, alkanolamine such as monoethanolamine, ethylethanolamine, diethylethanolamine, diethanolamine, and triethanolamine, and the like. Examples of the alkali metal hydroxide include sodium hydroxide, potassium hydroxide, and the like.

A content of the alkali-soluble resin is not particularly limited. By way of an example, the content of the alkali-soluble resin is preferably 1.0% by mass or more, and more preferably 1.3% by mass or more, in the ink composition. Moreover, the content of the alkali-soluble resin is preferably 3.3% by mass or less, and more preferably 3.0% by mass or less, in the ink composition. When the content of the alkali-soluble resin is within the above-described ranges, the ink composition can achieve both storage stability and ejection stability.

### (Water-soluble organic solvent)

The water-soluble organic solvent has a water solubility of 500 g/L or more at 25°C. Such a water-soluble organic solvent is not particularly limited. By way of an example, the water-soluble organic solvent preferably includes an alcohol and a polyhydric alcohol-based solvent, and more preferably includes methanol, ethanol, propanol, ethylene glycol, ethylene glycol monomethyl ether, ethylene glycol monoethyl ether, ethylene glycol monopropyl ether, ethylene glycol monobutyl ether, diethylene glycol, diethylene glycol monoethyl ether, diethylene glycol monopropyl ether, diethylene glycol monobutyl ether, triethylene glycol, triethylene glycol monomethyl ether, triethylene glycol monoethyl ether, triethylene glycol monopropyl ether, triethylene glycol monobutyl ether, propylene glycol, propylene glycol monomethyl ether, propylene glycol monoethyl ether, propylene glycol monopropyl ether, dipropylene glycol, dipropylene glycol monomethyl ether, dipropylene glycol monoethyl ether, dipropylene glycol monopropyl ether, tripropylene glycol, tripropylene glycol monomethyl ether, tripropylene glycol monoethyl ether, tripropylene glycol monopropyl ether, glycerin, and the like.

A content of the water-soluble organic solvent may be 20% by mass or more, preferably 25% by mass or more, in the ink composition. Moreover, the content of the water-soluble organic solvent is preferably 50% by mass or less, and more preferably 45% by mass or less, in the ink composition. When the content of the water-soluble organic solvent is less than 20% by mass, the ink composition has a problem of a low ejection stability.

Besides, the ink composition of the present embodiment may comprise water-soluble organic solvents each having a water solubility of 500 g/L or more at 25°C, as well as water-soluble organic solvents each having a water solubility of less than 500 g/L at 25°C (also referred to as other water-soluble organic solvents). Such other water-soluble organic solvents include hexanol, ethylene glycol monooctyl ether, propylene glycol monobutyl ether, dipropylene glycol monobutyl ether, tripropylene glycol monobutyl ether, dibutyl glycol, and the like. The ink composition of the present embodiment comprises, among the water-soluble organic solvents, 20% by mass or more of a water-soluble organic solvent having a water solubility of 500 g/L or more at 25°C, which is distinguished from the other water-soluble organic solvents. This provides an advantage that the ink composition of the present embodiment has a good storage stability.

### (Water)

Water is compounded in order to impart fluidity to the ink composition.

A content of water is not particularly limited. By way of an example, the content of water is preferably 10% by mass or more, and more preferably 30% by mass or more, in the ink composition. Moreover, the content of water is preferably 70% by mass or less, and more preferably 60% by mass or less, in the ink composition. When the content of water is within the above-described ranges, the ink composition can exhibit a moderate fluidity.

### (Surfactant)

A surfactant is not particularly limited. By way of an example, examples of the surfactant include an acetylene-based surfactant, a silicone-based surfactant, and the like.

Examples of the acetylene-based surfactant include, as commercially available products, "DYNOL 607", "DYNOL 609", "OLFINE E-1004", "OLFINE E-1010", "OLFINE E-1020", "OLFINE PD-001", "OLFINE PD-002W", "OLFINE PD-004", "OLFINE PD-005", "OLFINE EXP.4001", "OLFINE EXP.4200", "OLFINE EXP.4123", "OLFINE EXP.4300" (manufactured by Nissin Chemical Industry Co., Ltd.); "SURFYNOL 104E", "SURFYNOL 104H", "SURFYNOL 104A", "SURFYNOL 104BC", "SURFYNOL 104DPM", "SURFYNOL 104PA", "SURFYNOL 104PG-50", "SURFYNOL 420", "SURFYNOL 440", "SURFYNOL 465"(manufactured by Evonik Industries AG); and the like.

Examples of the silicone-based surfactant include, as commercially available products, "BYK-307", "BYK-333", "BYK-347", "BYK-348", "BYK-349", "BYK-345", "BYK- 378", "BYK-3455" (manufactured by BYK-Chemie), and the like.

A content of the surfactant is not particularly limited. By way of an example, the content of the surfactant is preferably 0.1% by mass or more, and more preferably 0.3% by mass or more, in the ink composition. Moreover, the content of the surfactant is preferably 10.0% by mass or less, and more preferably 6.0% by mass or less, in the ink composition. When the content of the surfactant is within the above-described ranges, there is an advantage that an image quality of a printed matter is improved.

### (Optional components)

In the ink composition of the present embodiment, various additives such as an extender pigment such as calcium carbonate, kaolin, barium sulfate, aluminum hydroxide, clay, and talc, an inorganic fine particle and an adhesive resin (an acrylic resin, a vinyl acetate resin) for imparting skid-proof capacity, a leveling agent for improving leveling property, an anti-foaming agent for imparting anti-foaming property, a basic compound such as caustic soda for imparting resolubility, a film-forming emulsion, a preservative, an antirust agent, and a cross-linking agent may be appropriately compounded.

The ink composition of the present embodiment is characterized in that a total amount of alkali metals is 1.5 g/L or less. The total amount of alkali metals may be 1.5 g/L or less, preferably 1.4 g/L or less. The total amount of alkali metals is preferably 0.5 g/L or more, and more preferably 0.9 g/L or more. When the total amount of alkali metals is within the above-described ranges, the ink composition easily maintains its water repellency on a nozzle plate for a long period of time while maintaining its storage stability. The total amount of alkali metals can be measured with an atomic absorption spectrophotometer (model number: ZA3300, manufacturer: Hitachi High-Tech Science Corporation) by quantifying Na and K using a calibration curve method.

The ink composition of the present embodiment can be prepared by stirring and mixing a pigment, an alkali-soluble resin, a water-soluble organic solvent having a water solubility of 500 g/L or more at 25°C, water, a surfactant, and various optional components, and then kneading the mixture utilizing a variety of kneaders such as, for example, a bead mill, a ball mill, a sand mill, an attritor, a roll mill, and a pearl mill, followed by performing a treatment of reducing a total amount of alkali metals.

That is, in the above-described method of producing an ink composition, if a treatment of reducing a total amount of alkali metals is not carried out, a total amount of alkali metals in an ink composition to be obtained is greater than 1.5 g/L. Thus, the ink composition of the present embodiment is adjusted so that the total amount of alkali metals is 1.5 g/L or less by adopting a treatment step of reducing the total amount of alkali metals.

Such a treatment step is not particularly limited. By way of an example, the treatment step is a step of treating the ink composition with an ion exchange resin or a chelating resin, or the like.

A ion exchange resin is not particularly limited. By way of an example, the ion exchange resin is of an acrylic acid type, a methacrylic acid type, a sulfonic acid type, a trimethylammonium type, a dimethylethanolammonium type, a polyamine type, or the like. Among them, the ion exchange resin is preferably of a methacrylic acid type or a sulfonic acid type.

A chelating resin is not particularly limited. By way of an example, the chelating resin is of iminodiacetic acid type, polyamine type, primary amine type, methylglucamine type, amidoxime type, isothiouronium type, thiol type, sulfonic acid type, phosphonic acid type, amino phosphate type, bispicolylamine type, semithiocarbamic acid type, or the like. Among them, the chelating resin is preferably of iminodiacetic acid type.

In the treatment step, a mixture obtained by mixing various raw materials is mixed with the above-described ion exchange resin or chelating resin to remove alkali metals. The obtained ink composition can be thereby adjusted so that a total amount of the alkali metals is 1.5 g/L or less. Besides, the ion exchange resin and the chelating resin can be removed, for example, with a sieve having an opening size of 250 meshes or the like.

One embodiment of the present invention has been described above. The present invention is not particularly limited to the above-described embodiment. Besides, the above-described embodiment mainly describes an invention having the following configurations.
(1) An aqueous inkjet ink composition comprising a pigment, an alkali-soluble resin, a water-soluble organic solvent having a water solubility of 500 g/L or more at 25°C, water, and a surfactant, wherein a content of the water-soluble organic solvent is 20% by mass or more in the aqueous inkjet ink composition, and wherein a total amount of alkali metals is 1.5 g/L or less.

According to such a configuration, the aqueous inkjet ink composition is less likely to erode a silicon nozzle plate. Moreover, the aqueous inkjet ink composition exhibits a good storage stability.

(2) The aqueous inkjet ink composition of (1), wherein the alkali-soluble resin is an acryl-based resin.

According to such a configuration, the aqueous inkjet ink composition has an advantages of a good pigment dispersibility during production of an ink base and an excellent storage stability of an ink composition.

(3) The aqueous inkjet ink composition of (1) or (2), wherein the water-soluble organic solvent is an alcohol-based solvent.

According to such a configuration, the aqueous inkjet ink composition has an advantage that it can achieve both storage stability and ejection stability.

### EXAMPLE

Hereinafter, the present invention will be described in more detail with reference to Examples. The present invention is not limited to these Examples. Besides, unless otherwise specified, "%" means "% by mass", and "part" means "part by mass".

Raw materials used and a preparation method are shown below.

### <Aqueous resin varnish>

20 parts by mass of an acrylic acid/n-butyl acrylate/benzyl methacrylate/styrene copolymer having a glass transition temperature at 40°C, a weight-average molecular weight of 30,000, and an acid value of 185 mgKOH/g was dissolved in a mixed solution of 2.5 parts by mass of potassium hydroxide and 77.5 parts by mass of water to obtain an aqueous resin varnish having a solid content of 20%.

### <Preparation of aqueous black ink base>

64.3 parts by mass of water was added to 23.7 parts by mass of an aqueous resin varnish and mixed to prepare a resin varnish for pigment dispersion. To this varnish, 12 parts by mass of carbon black (Product name: Printex 90, manufactured by Evonik Industries AG) was added, stirred and mixed, and then the mixture was kneaded with a wet type circulation mill to prepare an aqueous black ink base.

### <Preparation of aqueous yellow ink base>

64.3 parts by mass of water was added to 23.7 parts by mass of an aqueous resin varnish and mixed to prepare a resin varnish for pigment dispersion. To this varnish, 12 parts by mass of a yellow pigment (Product name: Novoperm Yellow 4G01, manufactured by CLARIANT) was added, stirred and mixed, and then the mixture was kneaded with a wet type circulation mill to prepare an aqueous yellow ink base.

### <Preparation of aqueous magenta ink base>

64.3 parts by mass of water was added to 23.7 parts by mass of an aqueous resin varnish and mixed to prepare a resin varnish for pigment dispersion. To this varnish, 12 parts by mass of a magenta pigment (Product name: Inkjet Magenta E5B02, manufactured by CLARIANT) was added, stirred and mixed, and then the mixture was kneaded with a wet type circulation mill to prepare an aqueous magenta ink base.

### <Preparation of aqueous cyan ink base>

64.3 parts by mass of water was added to 23.7 parts by mass of an aqueous resin varnish and mixed to prepare a resin varnish for pigment dispersion. To this varnish, 12 parts by mass of a cyan pigment (Product name: Heliogen Blue L7101F, manufactured by BASF) was added, stirred and mixed, and then the mixture was kneaded with a wet type circulation mill to prepare an aqueous cyan ink base.

### <Example 1>

### (Production of aqueous inkjet ink composition)

Each ink base was mixed with various raw materials according to the formulation shown in Table 1 below to produce an aqueous inkjet ink composition.

**Table 1**

| | | Example | | | | | | | | | | Comparative example | |
|---|---|---|---|---|---|---|---|---|---|---|---|---|---|
| | | 1 | 2 | 3 | 4 | 5 | 6 | 7 | 8 | 9 | 10 | 1 | 2 |
| Ink base | Aqueous yellow ink base | 34 | - | - | - | - | - | - | - | - | - | - | - |
| | Aqueous magenta ink base | - | 34 | - | - | 34 | 34 | 34 | 34 | 34 | 34 | 34 | 34 |
| | Aqueous cyan ink base | - | - | 34 | - | - | - | - | - | - | - | - | - |
| | Aqueous black ink base | - | - | - | 34 | - | - | - | - | - | - | - | - |
| Solvent | Propylene glycol | 35 | 35 | 35 | 35 | - | 35 | 35 | 35 | 35 | 35 | 35 | - |
| | Dipropylene glycol dimethyl ether | - | - | - | - | 35 | - | - | - | - | - | - | - |
| | Propylene carbonate | - | - | - | - | - | - | - | - | - | - | - | 35 |
| Surfactant (Nv%) | OLFINE E1004(*2) | 0.5 | 0.5 | 0.5 | 0.5 | 0.5 | - | 0.5 | 0.5 | 0.5 | 0.5 | 0.5 | 0.5 |
| | OLFINE E1010(*3) | - | - | - | - | - | 0.5 | - | - | - | - | - | - |
| Resin emulsion (Nv%) | Neocryl A-1092(*1) | 2 | 2 | 2 | 2 | 2 | 2 | 2 | 2 | 2 | 2 | 2 | 2 |
| Water | | 28.5 | 28.5 | 28.5 | 28.5 | 28.5 | 28.5 | 28.5 | 28.5 | 28.5 | 28.5 | 28.5 | 28.5 |
| Total | | 100 | 100 | 100 | 100 | 100 | 100 | 100 | 100 | 100 | 100 | 100 | 100 |
| Treatment step | Ion exchange resin 1 | 1 | 1 | 1 | 1 | 1 | 1 | 0.5 | 2 | - | - | - | 1 |
| | Ion exchange resin 2 | - | - | - | - | - | - | - | - | 1 | - | - | - |
| | Chelating resin 1 | - | - | - | - | - | - | - | - | - | 1 | - | - |
| | Content of alkali metals before treatment step (g/L) | 1.6 | 1.7 | - | - | - | - | - | - | - | - | 1.7 (*4) | - |
| | Content of alkali metals after treatment step (g/L) | 1.3 | 1.2 | 1.3 | 1.1 | 1.2 | 1.1 | 1.4 | 1.0 | 1.3 | 1.1 | | 1.2 |
| Evaluation result | Storage stability | ○ | ○ | ○ | ○ | Δ | ○ | ○ | ○ | ○ | ○ | ○ | × |
| | Change overtime in water repellency | ○ | ○ | ○ | ○ | ○ | ○ | ○ | ○ | ○ | ○ | × | ○ |

| | | | | | | | | | | | | | |
|---|---|---|---|---|---|---|---|---|---|---|---|---|---|
| (*1) Neocryl A-1092 is a styrene-acryl-based emulsion (solid content: 48.5% by mass, manufactured by DSM, glass transition temperature: 6°C) (*2) OLFINE E1004 is an acetylene-based surfactant (solid content: 100% by massHLB: 8, manufactured by Nissin Chemical Industry Co., Ltd.) (*3) OLFINE E1010 is an acetylene-based surfactant (solid content: 100% by mass, HLB: 13, manufactured by Nissin Chemical Industry Co., Ltd.) (*4) Since Comparative example 1 was not subjected to any treatment step, a content of alkali metals did not change. | | | | | | | | | | | | | |

### (Treatment step with ion exchange resin/chelating resin)

100 g of an aqueous inkjet ink composition and 1.0 g of an ion exchange resin 1 below were mixed and stirred for 30 minutes. Then, the ion exchange resin was removed with 250 meshes, thereby obtaining an aqueous inkjet ink composition of Example 1.

### <Ion exchange resin/chelating resin>

Ion exchange resin 1: Acrylic acid type ion exchange resin, Amberlite IRC76 (manufactured by ORGANO CORPORATION)
Ion exchange resin 2: Sulfonic acid type ion exchange resin, Amberlite HPR1024 H (manufactured by ORGANO CORPORATION)
Chelating resin 1: Iminodiacetic acid type chelating resin, in which a carboxyl group at the terminal is not neutralized

### <Examples 2 to 8, Comparative examples 1 and 2>

Aqueous inkjet ink compositions were prepared in the same manner as in Example 1, except that formulations were changed to those shown in Table 1. Besides, the ink composition of Comparative example 1 is the same ink composition as that of Example 2 before being subjected to the treatment step with the ion exchange resin/chelating resin.

For each aqueous inkjet ink composition, a content of alkali metal was measured before and after the treatment step. Moreover, for each obtained aqueous inkjet ink composition, changes over time in storage stability and water repellency on a nozzle plate were evaluated. The results are shown in Table 1.

<Quantification of alkali metal>

An aqueous inkjet ink composition was diluted 3000 times with an ion-exchanged water, and Na and K were quantified using a calibration curve method with an atomic absorption spectrophotometer (model number: ZA3300, manufacturer: Hitachi High-Tech Science Corporation).

### <Storage stability>

An aqueous inkjet ink composition was placed in a glass bottle, and a viscosity at 25°C thereof was measured using a viscometer (RE100L type, manufactured by Toki Sangyo Co., Ltd.). Then, it was sealed and stored at 60°C for 1 month, and a viscosity (25°C) after storage thereof was measured with a viscometer. Stability over time was evaluated with a rate of change in viscosity (viscosity at 60°C after 1 month - viscosity before storage / viscosity before storage).

### (Evaluation criteria)

○: The rate of change in viscosity was less than 5%.
△: The rate of change in viscosity was 5% or more and less than 10%.
×: The rate of change in viscosity was 10% or more and less than 30%.

### <Change over time in water repellency in nozzle plate>

A silicon nozzle plate with 2 cm × 2 cm was immersed in an aqueous inkjet ink composition and stored at 60°C for one month to evaluate water repellency of the nozzle plate after storage based on a contact angle of water.

### (Evaluation criteria)

○: The contact angle of water was 90° or higher.
△: The contact angle of water was 80° or higher and lower than 90°.
×: The contact angle of water was lower than 80°.

As shown in Table 1, the aqueous inkjet ink composition of the present invention was less likely to erode the silicon nozzle plate and exhibited a good storage stability.

## Claims

1. An aqueous inkjet ink composition comprising a pigment, an alkali-soluble resin, a water-soluble organic solvent having a water solubility of 500 g/L or more at 25°C, water, and a surfactant,
wherein a content of the water-soluble organic solvent is 20% by mass or more in the aqueous inkjet ink composition, and
wherein a total amount of alkali metals is 1.5 g/L or less.

2. The aqueous inkjet ink composition of claim 1, wherein the alkali-soluble resin is an acryl-based resin.

3. The aqueous inkjet ink composition of claim 1 or 2, wherein the water-soluble organic solvent is an alcohol-based solvent.
